# EUROPEAN PATENT SPECIFICATION

(11) **EP 1 253 282 B1**
(45) Date of publication and mention of the grant of the patent: **05.04.2006**
(21) Application number: 02007898.6
(22) Date of filing: 12.05.1999
(51) Int. Cl.: E21B 19/06

(54) **Elevator with a bearing**
Hebevorrichtung mit Lager
Elévateur avec roulement

(30) Priority: 12.05.1998 US 76507
(43) Date of publication of application: 30.10.2002
(62) Divisional of application: 99925127.5
(73) Proprietor: WEATHERFORD/LAMB, INC., Houston Texas 77027 (US)
(72) Inventor: Abrahamsen, Egil, Katy, TX 77450 (US); Albright, Stephen Lee, Houston, TX 77055 (US); Hollingsworth, Jimmy Lawrence, Lafayette, LA 70508 (US); Bearb, Jean Donald, Cypress Texas 78501 (US); Leicht, Frederick Marion, Cypress, TX 77429 (US); Hayes, Michael Warren, Lafayette, LA 70503 (US); Birdwell, John Cleveland, Liberty, TX 77575 (US); Speij, Leendert, 4872 WZ Etten-Leur (NL)
(74) Representative: Talbot-Ponsonby, Daniel Frederick

(56) References cited:
- EP-A- 0 147 511
- US-A- 2 722 450
- US-A- 3 393 022
- US-A- 3 570 610
- US-A- 3 588 162
- US-A- 3 915 244
- US-A- 3 934 956
- US-A- 3 985 406
- US-A- 4 736 807

## Description

This invention relates to elevators and is concerned particularly, but not exclusively, with elevators for facilitating the connection or disconnection of a tubular to or from a string of tubulars.

During the drilling of oil and gas wells it is necessary to connect and disconnect tubulars for use therein. Recently, there has been the need to use casing of a very large diameter for lining the well. In particular, modern casing may be forty-eight inches in diameter.

The weight of a single joint of modern casing causes many problems. In particular, casing is usually threaded. When a joint of casing is connected and disconnected from the string of casing, there is a high probability that the threads will become damaged by collisions therebetween.

It has been proposed to use a device called a "single joint compensating elevator" as disclosed in EP-A-0 171 144. The device enables the weight of a single joint to be compensated for, such that when the joint is lowered or raised to or from a string, the effective weight of the joint is zero. A pneumatic bellows or the like allows small adjustments to be made to allow the joint of casing to be made up to the string of casing. The device also allows over compensation to be made, such that upon disconnection of a joint from the string of casing, the joint springs from the string of casing. The device depends from the primary elevator of the rig, with a single joint elevator depending therefrom.

The above described arrangement requires the device to be attached to the elevator prior to each connection or disconnection and removed therefrom prior to lowering or raising the string, which is carried out by the primary elevator. This procedure wastes valuable rig time.

US 3588162 describes a rotating flapper elevator incorporating flappers that may be rotated into a horizontal position to engage beneath a collar at the end of a tubular to support the tubular during connection or disconnection to or from a string of tubulars. However, such an arrangement may be unsuitable for supporting very high loads.

EP 0147511A discloses a fixed support device for a drill pipe incorporating bearing surfaces that are displaceable against hydraulic pressure such that the surfaces have an equal share of the load.

In accordance with a first aspect of the present invention there is provided an elevator provided with a bearing to facilitate rotation between said elevator and an item to be held in said elevator, characterised in that said bearing is located on a compressible member compressible in response to weight of the item.

The invention also provides a device for facilitating the connection or disconnection of a tubular to or from a string of tubulars, said device incorporating such an elevator. The device may also incorporate a rim for attachment to a tubular, said rim being suitable for resting on the bearing of said elevator. Preferably, the rim forms part of a cap.

For a better understanding of the present invention, reference will now be made, by way of example, to the accompanying drawings, in which:
Figure 1a is a side view of a first embodiment of a wellbore tubular connection system, in use in a first stage of operation;
Figure 1b is a front view of the system of Figure 1a;
Figure 1c is a front view of the system of Figure 1a in a second stage of operation;
Figure 1d is an enlarged view of the system of Figure 1a in said first stage of operation;
Figure 1e is an enlarged view of the system of Figure 1a in said second stage of operation;
Figure 2a is a side view of a second embodiment of a wellbore tubular connection system, in use in a first stage of operation;
Figure 2b is an enlarged view of part of the system of Figure 2a;
Figure 3a is a view of the system of Figure 2a in a second stage of operation;
Figure 3b is an enlarged view of part of the system of Figure 3a;
Figure 4a is a front view of a third embodiment of a wellbore tubular connection, in use in a first stage of operation;
Figure 4b is a front view of the system of figure 4a, in use in a second stage of operation;
Figure 4c is a side view of the system of Figure 4a in use;
Figure 5 is a front view of a fourth embodiment of a wellbore tubular connection system in use;
Figure 6 is a front view of a fifth embodiment of a wellbore tubular connection system in use;
Figure 7a is a view in perspective of a part of the system of Figure 3a in accordance with the invention;
Figure 7b is a view in perspective of the part of the system of Figure 7a:
Figure 7c is an alternative to the part of the system of Figure 7a;
Figure 8 is an alternative arrangement of part of the system of Figure 7a;
Figure 9a is a view of a wellbore tubular connection system situated above a tubular;
Figure 9b is a view of the system of Figure 9a located on said tubular; and
Figure 9c is a perspective view of the system of Figure 9a.

Referring to Figures 1a - 1e, there is shown a wellbore tubular connection system for connection of a tubular to a string of tubulars, generally identified by reference numeral 1.

System 1 comprises main bails 2 suspended from the eyes 4 of a rig's travelling block 6. Lower ends 8 of the main bails 2 extend through eyes 9 of an upper elevator 10. Cables 11 support the travelling block 6 in a rig (not shown).

Slings 12, made of, for example, steel or synthetic cables, are connected at their top ends to a lower end of the travelling block 6 and at their bottom ends to a lift eye 14 of a joint compensator 20 (which may be any known joint compensator, air cylinder compensator, hydraulic cylinder compensator, or air spring compensator, including any device for joint compensation disclosed herein).

An optional swivel 18 has its top end connected to a lower eye 22 of the joint compensator 20 and its bottom end connected to a shackle 16 which itself is connected to a top end of a sub 24. The sub 24 is threadedly connected to a standard, commercially available lift assembly 30 which has a lower hook end 26 to which are releasably connected links 28. A lower elevator 40 is connected to the lower ends of the links 28.

Both the elevators 10 and 40 may be any suitable known elevator and any elevator disclosed herein. As shown each elevator 10 and 40 is a hinged-door type elevator which is openable to receive a tubular and closable and latchable for holding a tubular. Slip-type elevators may be used. A stand 36 of two tubular joints 32 and 34 is held by the elevator 40 and supported by the system 1. Although two tubular joints are shown, it is to be understood that the system 1 can support one or a plurality of two, three, four or more joints, including an entire tubular string extending down into a wellbore.

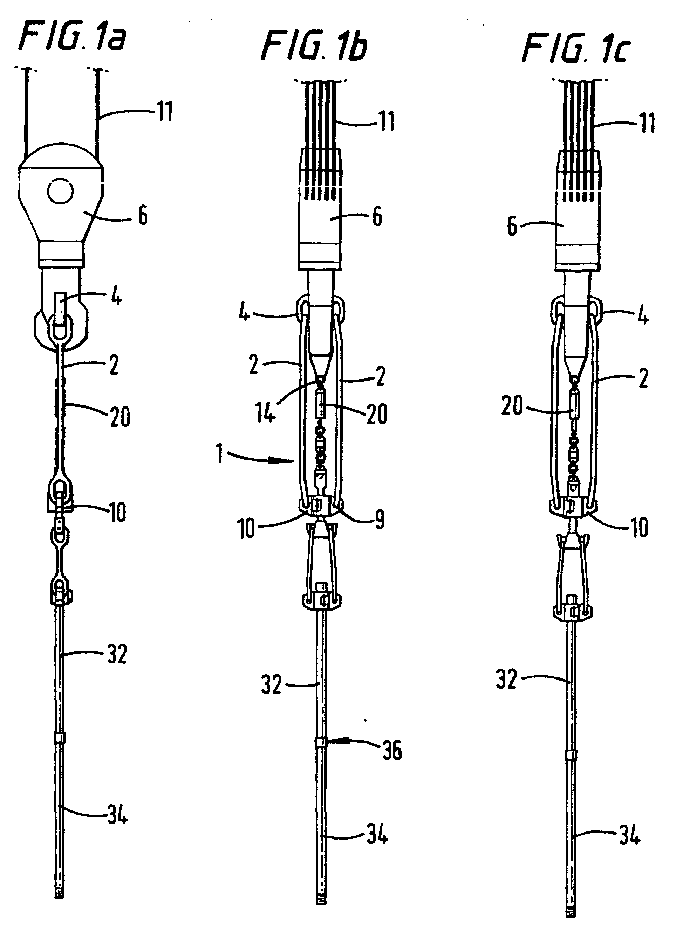

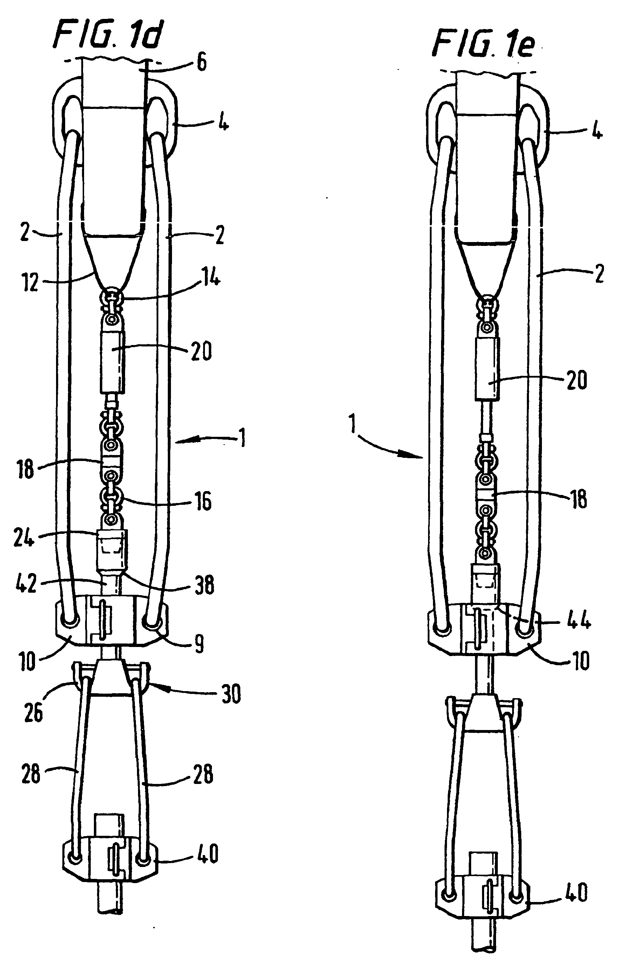

Figures 1b and 1d show the system 1 at a first stage of operation. The stand 36 of two tubular joints is being lifted by the system 1, and the weight of the stand 36 is being compensated for.

Figures 1c and 1e show the single joint compensator 20 in an extended position. The sub 24 abuts the top of the elevator 40. The system can now hold the weight of the entire string of tubulars to which the stand 36 may be attached or detached.

Initially, the elevator 40 is latched onto a new stand of tubulars. With the travelling block 6, the stand is lifted to a vertical position. At this point, a shoulder 38 of a shaft 42 of the assembly 30 is bottomed out on a corresponding shoulder 44 of a bowl 46 of the elevator 10. The compensator 20 is then activated to compensate for the weight of the stand, raising the shaft 42 so that the elevator 10 no longer supports the stand, as shown in Figure 19D.

While the stand's weight is compensated for by the compensator 20, the stand is easily manipulable and its lower end is positioned above and then lowered into a top joint of a tubular string being supported by the rig's slips on the rig floor (not shown) . As the stand is made up into the string, the compensator 20 permits the compensated lowering of the stand. When the joint is made up, the rig slips are released; the travelling block system raises the system 1; the shoulder 38 bottoms out on the bowl's shoulder 44; and then the rig's system supports and lowers the entire string. Again the rig slips are set; the elevator 40 is released; and the process of adding an additional stand begins again. A reverse process is used for break-out operations, with the joint compensator 20 activated prior to or following initial lifting up on the string and setting of the rig's slips. As a joint is unscrewed and rising, the joint compensator 20 compensates for the weight of the joint.

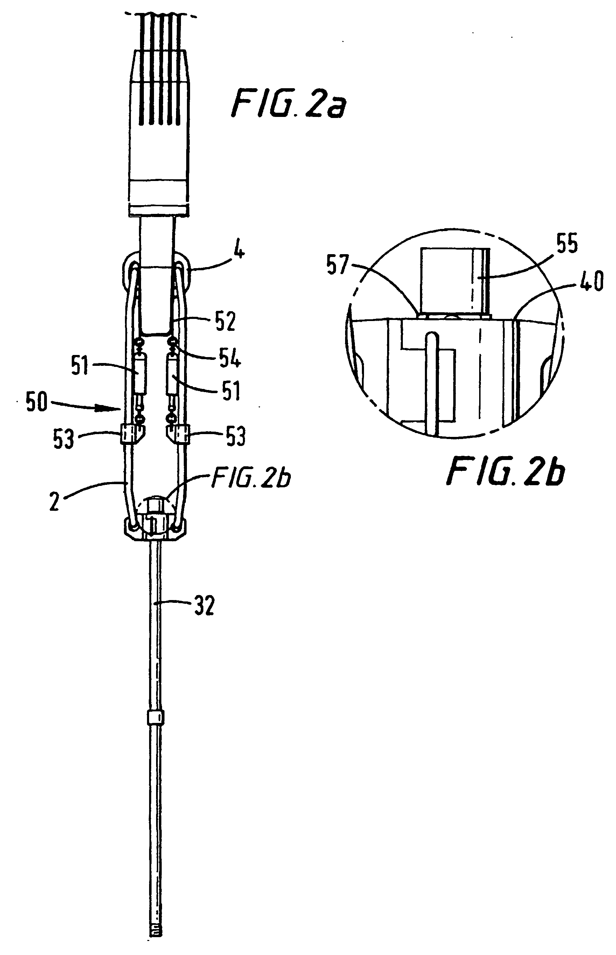

Figures 2a and 2b show a system 50 with some parts that are like those of the system 1 and which bear the same identifying numerals. Slings 52 through the eyes 4 connect the tops of joint compensators 51 to the eyes 4. Clamps 53 releasably clamp the lower ends of the joint compensators 51 to the bails 2. Shackles 54 provide for pivoting of the joint compensators 51.

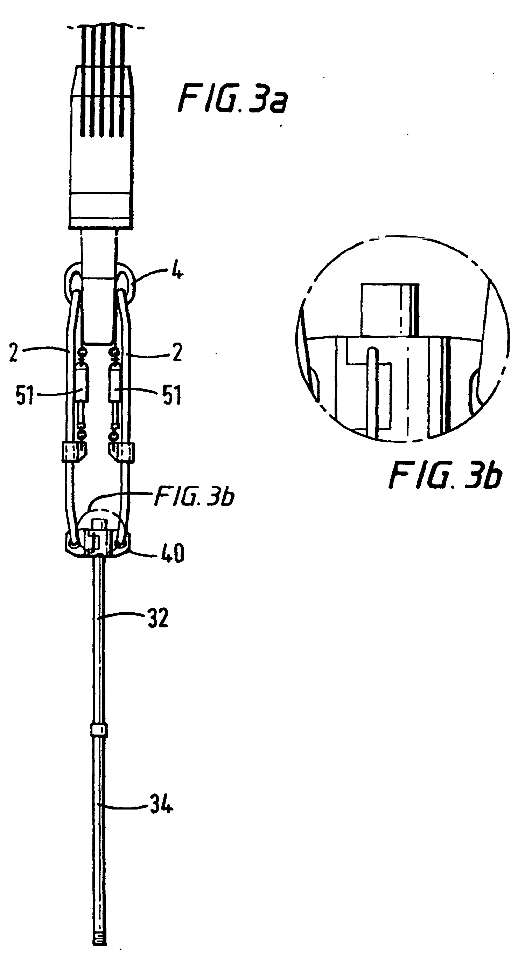

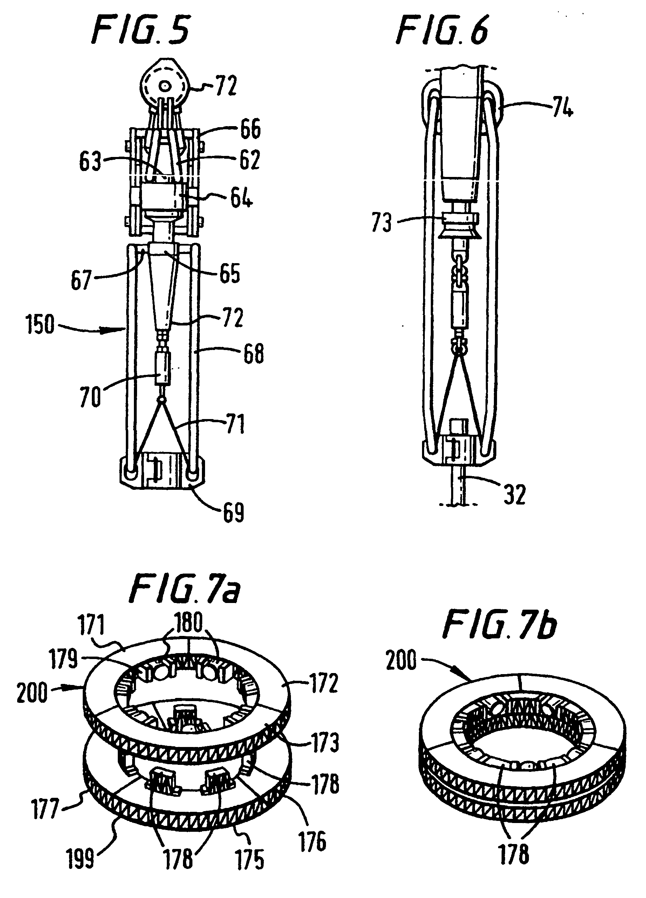

As shown in Figure 2b, an upper part 55 of the tubular 32 is resting on rollers (one shown) 57 rotatably mounted to the elevator 40's body. The rollers 57 are like the rollers in Figure 7a. As shown in Figure 3b, the rollers 57 have been moved down, compressing compression members (not shown, see Figures 5a, 5b). As shown in Figure 3a, the joint compensators 51 are compensating for the weight of the tubulars 32, 34; and the top shackles of the bails 2 are riding up in the eyes 4. The eyes 4 are not at this point bearing the weight through the entire length of the bails 2 of the system 50 and the tubulars 32, 34. As shown in Figure 3b, the elevator 40, bails 2 and eyes 4 are bearing this weight and the joint compensators 51 are not compensating for the weight of the tubulars. Typical control lines and control apparatus (not shown) are used with the compensators 51.

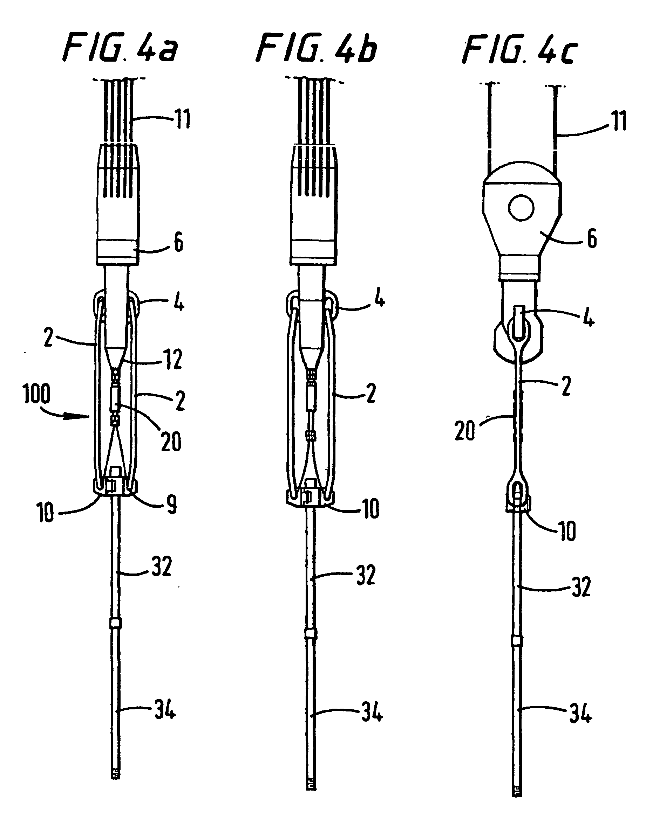

Figures 4a to 6 show a system 100 with the travelling block 6 with the cables 11 supporting the system 100 in a rig derrick (not shown). The bails 2 support the elevator 10 which holds the tubulars 32, 34 (all as in Figure 1a previously described). Slings 12 support joint compensator 20 below the travelling block 6 and slings 53 connect the joint compensator 20 to the elevator 10 so that the joint compensator (as shown in Figure 4a) compensates for the weight of tubulars held by the elevator 10. Figure 4b shows the eyes 4, bails 2 and elevator 10 supporting the tubulars 32, 34 (and whatever may be connected thereto). The joint compensator 20 may be any compensator disclosed herein (as may be the compensator 70, Figure 4d). Typical control lines and control apparatus are used with the joint compensator 20 (and the compensators 20, 70) or such lines and apparatus as disclosed herein (as is the case for any compensator in Figures 1a, 2a, 3a, and 5).

Figure 5 shows a top drive system 150 suspended below a travelling block 72 with eyes 62 to which are connected a swivel 63, a power train 64 and a top drive 65. A guide dolly 66 holds and guides the top drive 65. Lift eyes 67 connected to the top drive support bails 68 which support a lower elevator 69 (like the elevator 20). A joint compensator 70 is connected to a lower end of a lift sub 72 which is connected to the top drive 65 and slings 71 interconnect the lower elevator 69 and the joint compensator 70.

Figure 6 shows an embodiment of the system 150 compensating for the weight of a tubular 32 (or a tubular string including the tubular 32). The embodiment of Figure 6 has an elevator 74 instead of the lift eyes 67 of Figure 5. There is also provided a circulating head 73 for use with circulating fluids in the tubulars to be connected and disconnected to or from a string of tubulars.

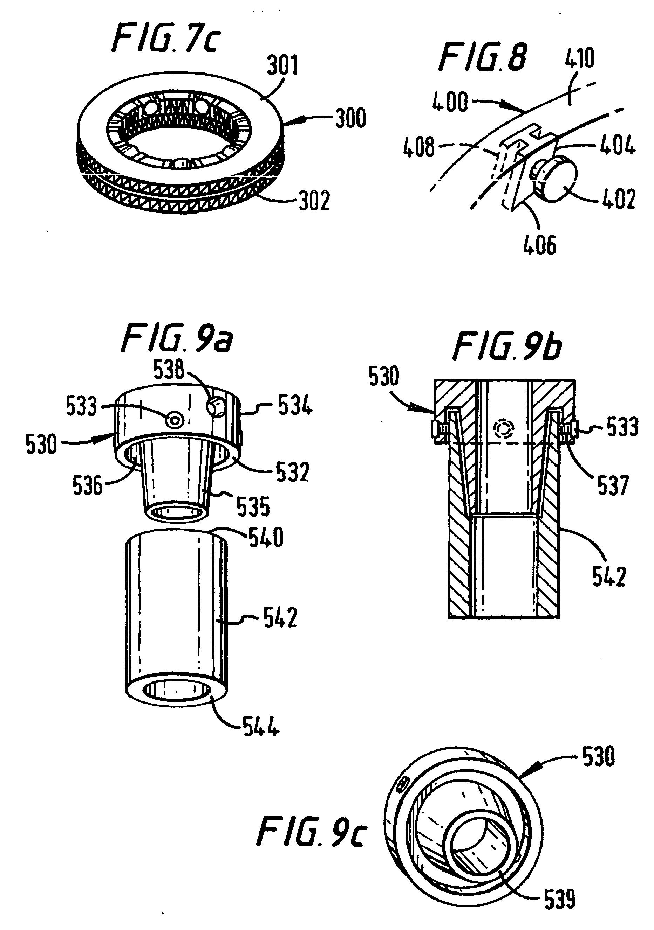

Figures 7a and 7b show a roller bearing assembly 200 with segments 171, 172, and 173 which are insertable into an elevator to facilitate rotation of a tubular with respect to the elevator. A plurality of rollers 180 are rotatably mounted to the segments 171, 172, and 173. Arms 179 extends inwardly on each side of each roller 180. A base member 174 disposed beneath the roller bearing assembly 200 has three segments 175, 176, and 177 each with two or three upwardly projecting supports 178. In operation a tubular disposed in the bearing assembly 200 is initially supported by the rollers 180. As the tubular is lowered or elevator is raised weight applied to the rollers increases, pushing the segments 171 to 173 down, and thereby arms 179 compress compressible members 199 adjacent each support 178. Eventually the supports 178 (see Figure 7b) project up beyond the top of the rollers 80 and bear the weight of the tubular and other tubulars, if any, attached to it. The compressible members 199 may be made of any suitable compressible and/or cushion material, including, but not limited to elastic materials, rubber, elastomeric materials, and/or a spring or springs of suitable spring force, and/or vented gas filled bladders (in one aspect which are selectively refillable) and/or any combination thereof. Alternatively, no compressible members are used in the system of Figure 7a (or of Figure 9).

Instead of three segments the bearing assembly and/or base may be made of two, four or more segments. As shown in Figure 7c, an assembly 300 has a bearing assembly 301 and a base 302 which are not segmented.

Bearing assemblies as in Figures 7a and 7c may be used in any suitable tubular handling apparatus or device, including, but not limited to, pipe handlers, pipe positioners, elevators, spiders, and tongs.

Figure 8 illustrates a particular embodiment of a bearing system 400 with a plurality of rollers 402 (one shown) useful in assemblies as in Figures 7a and Figure 7c. Each roller 402 is rotatably mounted to a support 404 which is disposed above a compressible member (or material) 406. The support 404 is releasably disposed in a slot 408 in an elevator body 410. Each support 404 may be held in place with one or more set screws and/or bolts. Such a system may be used in any item listed (pipe handlers, etc.) in the preceding paragraph.

Figures 9a and 9b illustrate a lift cap 530 for use with various wellbore tubulars for providing a support surface 532 which can rest on a bearing assembly (as, for example in Figures 7a and 7c). The lift cap 530 has a generally cylindrical body 534 with an end 535 which may be threadedly engageable on a threaded end 540 of a tubular 542 (Figure 24B). The wall 544 of the tubular 542 is received in a recess 536 around the cap's body 534. Lift/rotation holes 538 (one of two shown in Figure 9a) facilitate lifting and rotation of the cap 530. Set screws 533 through holes 537 secure the cap 530 to the tubular 540 to prevent unwanted unscrewing of the two. Figure 9c shows a central channel 539 through the lift cap 530.

It is envisaged that the invention is suitable for use with pipe, drill pipe, work strings and casing.

## Claims

1. An elevator provided with a bearing (57) to facilitate rotation between said elevator (40) and an item to be held in said elevator (40), **characterised in that** said bearing (57) is located on a compressible member (199) compressible in response to the weight of the item.

2. An elevator as claimed in claim 1, wherein said bearing (57) comprises rollers (180) for supporting the item, said elevator (40) being arranged such that the compressible member (199) is compressible in response to the weight of the item on the rollers (180).

3. An elevator as claimed in claim 1 or 2, further comprising supports (178) extending upwardly in use from the compressible member (199) for supporting the weight of the item when the compressible member (199) is compressed.

4. An elevator as claimed in claim 1, 2 or 3, wherein the item to be held in said elevator (40) is a tubular (32, 34).

5. A device for facilitating the connection or disconnection of a tubular to or from a string of tubulars, said device incorporating an elevator according to any preceding claim.

6. A device as claimed in claim 5, wherein said device incorporates a rim (532) for attachment to a tubular, said rim being suitable for resting on the bearing of said elevator.

7. A device as claimed in claim 5 or 6, incorporating a compensator (20) for selectively compensating for the weight of the item, the elevator (40) being suspended below the compensator (20).

8. A device as claimed in claim 7, incorporating a wellbore elevator (10) adapted to be connected to wellbore apparatus (6) for selectively supporting the compensator (20) and the item.

9. A device as claimed in claim 8, further comprising a connection sub (24) having a top portion connected to and below the compensator (20), a mid portion extending through the wellbore elevator (10) and a bottom portion, the elevator (40) being suspended below and connected to the bottom portion of the connection sub (24).

10. A device as claimed in claim 9, wherein the connection sub (24) has a shoulder (38) so that the wellbore elevator (10) supports the connection sub (24), the elevator (40) and the item when the shoulder (38) rests on the wellbore elevator (10).

## Revendications

1. Elévateur comprenant un roulement (57) pour faciliter la rotation entre ledit élévateur (40) et un article devant être retenu dans ledit élévateur (40), **caractérisé en ce que** ledit roulement (57) est agencé sur un élément compressible (199) pouvant être comprimé en réponse au poids de l'article.

2. Elévateur selon la revendication 1, dans lequel ledit roulement (57) comprend des rouleaux (180) pour supporter l'article, ledit élévateur (40) étant agencé de sorte que l'élément compressible (199) peut être comprimé en réponse au poids exercé par l'article sur les rouleaux (180).

3. Elévateur selon les revendications 1 ou 2, comprenant en outre des supports (178) s'étendant en service vers le haut par rapport à l'élément compressible (199) pour supporter le poids de l'article lorsque l'élément compressible (199) est comprimé.

4. Elévateur selon les revendications 1, 2 ou 3, dans lequel l'article devant être retenu dans ledit élévateur (40) est un élément tubulaire (32, 34).

5. Dispositif destiné à faciliter la connexion ou la déconnexion d'un élément tubulaire à un train de tubes ou de celui-ci, ledit dispositif incorporant un élévateur selon l'une quelconque des revendications précédentes.

6. Dispositif selon la revendication 5, dans lequel ledit dispositif incorpore un rebord (532) en vue de la fixation à un élément tubulaire, ledit rebord étant destiné à reposer sur le roulement dudit élévateur.

7. Dispositif selon les revendications 5 ou 6, incorporant un compensateur (20) destiné à compenser sélectivement le poids de l'article, l'élévateur (40) étant suspendu au-dessous du compensateur (20).

8. Dispositif selon la revendication 7, incorporant un élévateur de puits de forage (10) destiné à être connecté à un dispositif du puits de forage (6) pour supporter sélectivement le compensateur (20) et l'article.

9. Dispositif selon la revendication 8, comprenant en outre une réduction de tiges de connexion (24), comportant une partie supérieure connectée au compensateur (20) et au-dessous de celui-ci, une partie centrale s'étendant à travers l'élévateur du puits de forage (10) et une partie inférieure, l'élévateur (40) étant suspendu au-dessous de la partie inférieure de la réduction de tiges de connexion (24) et connecté à celle-ci.

10. Dispositif selon la revendication 9, dans lequel la réduction de tiges de connexion (24) comporte un épaulement (38), de sorte que l'élévateur du puits de forage (10) supporte la réduction de tiges (24), l'élévateur (40) et l'article lorsque l'épaulement (38) repose sur l'élévateur du puits de forage (10).

## Patentansprüche

1. Hebevorrichtung, die mit einem Lager (57) versehen ist, um eine Drehung zwischen der Hebevorrichtung (40) und einem in der Hebevorrichtung (40) gehaltenen Gegenstand zu erleichtern, **dadurch gekennzeichnet, dass** das Lager (57) auf einem zusammendrückbaren Element (199) angeordnet ist, das als Reaktion auf das Gewicht des Gegenstandes zusammendrückbar ist.

2. Hebevorrichtung nach Anspruch 1, bei der das Lager (57) Rollen (180) für das Tragen des Gegenstandes aufweist, wobei die Hebevorrichtung (40) so angeordnet ist, dass das zusammendrückbare Element (199) als Reaktion auf das Gewicht des Gegenstandes auf den Rollen (180) zusammendrückbar ist.

3. Hebevorrichtung nach Anspruch 1 oder 2, die außerdem Auflagen (178) aufweist, die sich bei Benutzung nach oben vom zusammendrückbaren Element (199) für das Aufnehmen des Gewichtes des Gegenstandes erstrecken, wenn das zusammendrückbare Element (199) zusammengedrückt wird.

4. Hebevorrichtung nach Anspruch 1, 2 oder 3, bei der der in der Hebevorrichtung (40) zu haltende Gegenstand ein Rohr (32, 34) ist.

5. Vorrichtung zum Erleichtem der Verbindung oder Trennung eines Rohres mit oder von einem Rohrstrang, wobei die Vorrichtung eine Hebevorrichtung nach einem der vorhergehenden Ansprüche enthält.

6. Vorrichtung nach Anspruch 5, bei der die Vorrichtung einen Kranz (532) für eine Befestigung am Rohr enthält, wobei der Kranz für das Aufliegen auf dem Lager der Hebevorrichtung geeignet ist.

7. Vorrichtung nach Anspruch 5 oder 6, die eine Ausgleichseinrichtung (20) für das selektive Ausgleichen des Gewichtes des Gegenstandes enthält, wobei die Hebevorrichtung (40) unterhalb der Ausgleichseinrichtung (20) hängt.

8. Vorrichtung nach Anspruch 7, die eine Bohrlochhebevorrichtung (10) enthält, die so ausgeführt ist, dass sie mit der Bohrlochvorrichtung (6) für das selektive Tragen der Ausgleichseinrichtung (20) und des Gegenstandes verbunden wird.

9. Vorrichtung nach Anspruch 8, die außerdem ein Verbindungsverlängerungsstück (24) aufweist, das einen oberen Abschnitt, der mit und unterhalb der Ausgleichseinrichtung (20) verbunden ist, einen mittleren Abschnitt, der sich durch die Bohrlochhebevorrichtung (10) erstreckt und einen unteren Abschnitt aufweist, wobei die Hebevorrichtung (40) darunter hängt und mit dem unteren Abschnitt des Verbindungsverlängerungsstückes (24) verbunden ist.

10. Vorrichtung nach Anspruch 9, bei der das Verbindungsverlängerungsstück (24) einen Absatz (38) aufweist, so dass die Bohrlochhebevorrichtung (10) das Verbindungsverlängerungsstück (24), die Hebevorrichtung (40) und den Gegenstand trägt, wenn der Absatz (38) auf der Bohrlochhebevorrichtung (10) aufliegt.
